# EUROPEAN PATENT APPLICATION

(11) **EP 4 625 517 A2**
(43) Date of publication of application: **01.10.2025**
(21) Application number: 25150918.8
(22) Date of filing: 09.01.2025
(51) Int. Cl.: H01M 4/13

(54) **ELECTRODE ASSEMBLY FOR SECONDARY BATTERY**

(30) Priority: 29.02.2024 KR 20240029649
(71) Applicant: SAMSUNG SDI CO., LTD., Yongin-si, Gyeonggi-do 17084 (KR)
(72) Inventor: JEONG, Yoon Jae, 17084 Yongin-si (KR)
(74) Representative: Marks & Clerk LLP

(57) **Abstract**

An electrode assembly for a secondary battery having improved safety is provided. front end and a rear end of a positive electrode plate may be insulated from each other to prevent a short circuit from occurring due to deformation of a front end of the negative electrode plate. A rear end of the negative electrode plate may be insulated to prevent a short circuit between the negative electrode plate and the positive electrode plate. An additional insulating tape may be provided on the rear end of the negative electrode plate to prevent defects due to Z-shaped deformation of the negative electrode plate from occurring.

## Description

### 1. Field

Embodiments relate to an electrode assembly for a secondary battery with improved safety.

### 2. Description of the Related Art

In general, a secondary battery may include an electrode assembly in which a separator is disposed between a positive electrode plate and a negative electrode plate, and then the separator, the positive electrode plate, and the negative electrode plate may be stacked or wound. A case is provided in which the electrode assembly is accommodated together with an electrolyte, and a cap assembly seals the case.

If the electrode assembly is wound, a front end of the positive electrode plate near a center of the winding is cut from an active material layer. As the cycle of the secondary battery progresses, the negative electrode plate is repeatedly contracted and expanded to cause deformation of the front end into a Z-shape. A front end of the negative electrode plate may be deformed into a Z shape and be closer to a front end of the positive electrode plate. Here, if the active material at the front end of the positive electrode plate or the exposed base material (non-coated portion) is in contact with the active material of the negative electrode plate that has been deformed into the Z shape, a very strong short circuit may occur.

The above-described information is disclosed with respect to technology that serves as the background of the present disclosure and is only for improving understanding of the background of the present disclosure and, thus, may include information that does not constitute the related art.

### SUMMARY

Aspects of some embodiments of the present disclosure provide an electrode assembly for a secondary battery having improved safety.

According to some embodiments, an electrode assembly for a secondary battery includes: a first electrode plate on which a non-coating portion is disposed at a front end that is toward a winding center of the electrode assembly and a non-coating portion is disposed at rear end that is opposite to the front end, the first electrode plate has a surface A and a surface B opposite to the surface A, each of the surfaces A and B is provided with an intermediate non-coating portion that is disposed between the front end and the rear end of the first electrode plate, and a positive electrode tab is provided on the intermediate non-coating portion of the surface A; a second electrode plate on which a non-coating portion is disposed on a front end that is toward the winding center and non-coating portion is disposed at a rear end that is opposite to the front end, the second electrode plate has a surface A and a surface B, each of the surfaces A and B is provided with an intermediate non-coating portion that is disposed between the front end and the rear end of the second electrode plate, and a negative electrode tab is provided on the intermediate non-coating portion of the surface B; a tab cover tape attached to the positive electrode tab; a tab cover tape attached to the negative electrode tab; a first insulating tape attached to the non-coating portions at the front and rear ends of the surface A of the first electrode plate; a second insulating tape attached to the non-coating portions at the front and rear ends of the surface B of the first electrode plate; a third insulating tape attached to the surface A at each of the front and rear ends of the second electrode plate; and a fourth insulating tape attached to the surface B at each of the front and rear ends of the second electrode plate, wherein the first insulating tape and the second insulating tape are different sizes.

The surface A of each of the first electrode plate and the second electrode plate may be a surface faces the winding center of the electrode assembly.

A length of the second insulating tape in a longitudinal direction of the first electrode plate may be longer than a length of the first insulating tape in the longitudinal direction of the first electrode plate.

The length of the second insulating tape may be greater by about 4 mm ± 2 mm than the length of the first insulating tape.

Each of the first insulating tape and the second insulating tape may be larger than each of the non-coating portions at the front and rear ends of the first electrode plate.

A difference between a length of each of the first insulating tape and the second insulating tape and a length of each of the non-coating portions at the front and rear ends of the first electrode plate in a longitudinal direction of the first electrode plate may be about 2.5 mm.

A difference between a width of each of the first insulating tape and the second insulating tape and a width of each of the non-coating portions at the front and rear ends of the first electrode plate in a width direction of the first electrode plate may be about 1.3 mm.

Each of the third insulating tape and the fourth insulating tape may be spaced apart from a negative electrode active material layer of the second electrode plate in a longitudinal direction of the second electrode plate.

A distance between each of the third and fourth insulating tapes and the negative electrode active material layer may be about 1 mm or less.

Each of the third insulating tape and the fourth insulating tape may be larger than each of the non-coating portions at the front and rear ends of the second electrode plate.

A difference between a width of each of the third insulating tape and the fourth insulating tape and a width of each of the non-coating portions at the front and rear ends of the second electrode plate in a width direction of the second electrode plate may be about 1.2 mm ± 1 mm.

In a winding process, a cut end of the first electrode plate is positioned within attachment areas of the first insulating tape and the second insulating tape.

The cut end of the first electrode plate may be positioned within an overlapping area between the first insulating tape and the second insulating tape.

The cut end of the first electrode plate may be positioned within attachment areas of the third insulating tape and the fourth insulating tape.

According to some embodiments, an electrode assembly for a secondary battery includes: a first electrode plate provided with a surface A that faces a winding center of the electrode assembly and a surface B that is opposite to the surface A, wherein each of the surfaces A and B is provided with a non-coating portion that is disposed at a front end that faces the winding center and a non-coating portion that is disposed at a rear end that is opposite to the front end, each of the surfaces is provided with an intermediate non-coating portion provided between the front end and the rear end, and a positive electrode tab is provided on the intermediate non-coating portion of the surface A; a second electrode plate provided with a surface A that faces the winding center and a surface B that is opposite to the surface A, wherein each of the surfaces A and B is provided with a non-coating portion that is disposed on each of a front end that faces the winding center and a rear end that is opposite to the front end, each of the surfaces A and B is provided with an intermediate non-coating portion provided between the front end and the rear end, and a negative electrode tab is provided on the intermediate non-coating portion of the surface B; a tab cover tape attached to the positive electrode tab; a tab cover tape attached to the negative electrode tab; a first insulating tape attached to the non-coating portions of the surface A at the front and rear ends; a second insulating tape attached to the non-coating portions of the surface B at the front and rear ends; a third insulating tape attached to surface A at each of the front and rear ends; and a fourth insulating tape attached to the surface B at the front and rear ends, wherein sizes of the non-coating portions of the surface B of the first electrode plate are greater than sizes of the non-coating portions of the surface A of the first electrode plate.

The first insulating tape may be larger than the non-coating portions at the front and rear ends of the surface A of the first electrode plate, and the second insulating tape may be larger than the non-coating portions at the front and rear ends of the surface B of the first electrode plate.

A length of the second insulating tape in a longitudinal direction of the first electrode plate may be longer by 4 mm or about 4 mm ± 2 mm than a length of the first insulating tape.

A difference between a length of each of the first insulating tape and the second insulating tape and a length of each of the non-coating portions at the front and rear ends of the first electrode plate in a longitudinal direction of the first electrode plate may be 2.5 mm or about 2.5 mm.

A difference between a width of each of the first insulating tape and the second insulating tape and a width of each of the non-coating portions at the front and rear ends of the first electrode plate in a width direction of the first electrode plate may be 1.3 mm or about 1.3 mm.

Each of the third insulating tape and the fourth insulating tape may be spaced apart from a negative electrode active material layer of the second electrode plate in a longitudinal direction of the second electrode plate.

A spaced distance between each of the third and fourth insulating tapes and the negative electrode active material layer may be 1 mm or about 1 mm or less.

Each of the third insulating tape and the fourth insulating tape may be larger than each of the non-coating portions at the front and rear ends of the second electrode plate.

A difference between a width of each of the third insulating tape and the fourth insulating tape and a width of each of the non-coating portions at the front and rear ends of the second electrode plate in a width direction of the second electrode plate may be 1.2 mm or about 1.2 mm ± 1 mm.

A cut end of the first electrode plate may be positioned within attachment areas of the first insulating tape and the second insulating tape.

The cut end of the first electrode plate may be positioned within an overlapping area between the first insulating tape and the second insulating tape.

The cut end of the first electrode plate may be within positioned attachment areas of the third insulating tape and the fourth insulating tape.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:
FIG. 1 illustrates a schematic cross-sectional view of a state before an electrode assembly is wound according to embodiments;
FIG. 2 illustrates a schematic cross-sectional view of a portion after the electrode assembly is wound in FIG. 1;
FIG. 3 illustrates a plan view of both surfaces of a positive electrode plate in FIG. 1;
FIG. 4 illustrates a plan view of a portion of a surface A of the positive electrode plate in FIG. 3;
FIG. 5 illustrates a plan view of a portion of a surface B of the positive electrode plate in FIG. 3;
FIGS. 6 and 7 illustrate schematic cross-sectional views of a state in which the electrode assembly is wound according to embodiments;
FIG. 8 illustrates a plan view of both surfaces of a negative electrode plate in FIG. 1; and
FIG. 9 illustrates a plan view of a portion of the negative electrode plate in FIG. 8.

### DETAILED DESCRIPTION

Embodiments of the present disclosure may be embodied in many different forms and should not be construed as being limited to the embodiments set forth herein; rather, the disclosed embodiments are provided so that those skilled in the art will thoroughly understand the present disclosure. Moreover, the disclosed embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A may be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the prevent disclosure according to various process states or usage states of the prevent disclosure, and, thus, the present disclosure is not limited thereto. For example, an element or feature shown in the drawings is turned inside out, the element or feature described as "beneath" or "below" may change into "above" or "upper". Thus, the term "lower" may encompass the term "upper" or "below".

Hereinafter, an electrode assembly for a secondary battery according to embodiments of the present disclosure will be described in detail with reference to the accompanying drawings.

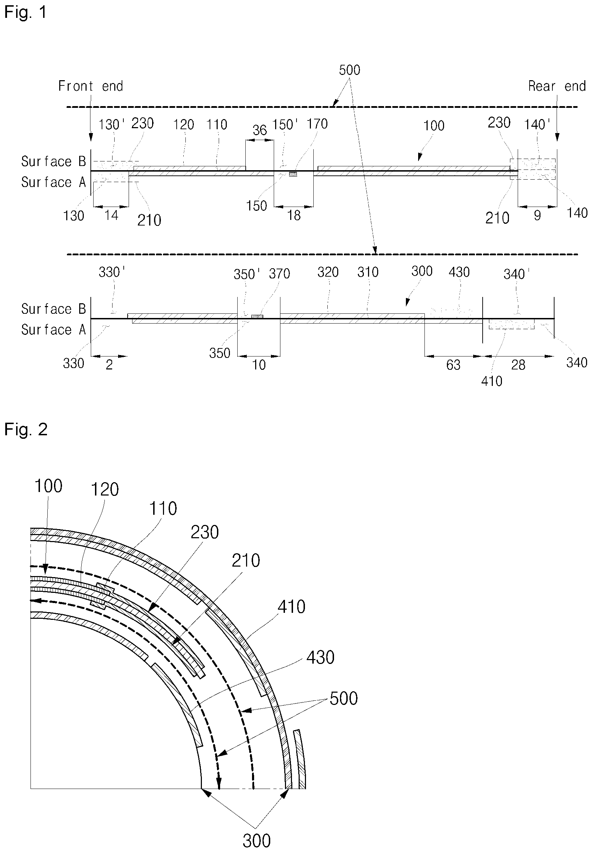

FIG. 1 illustrates a schematic cross-sectional view of a state before an electrode assembly is wound according to embodiments. FIG. 2 illustrates a schematic cross-sectional view of a portion after the electrode assembly is wound in FIG. 1.

An electrode assembly accommodated in a cylindrical or pouch-type case may be wound into a cylindrical or oval shape. In a winding process, the electrode assembly may be wound in a state in which a positive electrode plate, a negative electrode plate, and a separator between the positive electrode plate and the negative electrode plate may stacked in a predetermined order. Generally, the form in which the positive electrode plate, the negative electrode plate, and the separator are completely wound may be referred to as an electrode assembly. The form in which the positive electrode plate, the negative electrode plate, and the separator are stacked before winding the positive electrode plate, the negative electrode plate, and the separator may be referred to as a separate term such as an electrode strip. In some embodiments, this may be only a distinction of terms for convenience, and in the present disclosure, the term "electrode assembly" may include all forms before and after the winding.

Referring to FIGS. 1 and 2, the electrode assembly according to embodiments may include a first electrode plate 100, a second electrode plate 300, and a separator 500. The first electrode plate 100, the second electrode plate 300, and the separator 500 may be wound in a state with the first electrode plate 100, the second electrode plate 300, and the separator 500 stacked in a predetermined order. Hereinafter, for convenience, an end facing a winding center may be referred to as a front end (or front end portion), and an end opposite the front end may be referred to as a rear end (or rear end portion). In some embodiments, during the winding, an inner surface facing the winding center may be referred to as a surface A, and an outer surface facing the outside may be referred to as a surface B.

In some embodiments, the first electrode plate 100 may be a positive electrode plate. A first insulating tape 210 and a second insulating tape 230 may be provided at the front end and a rear end of the first electrode plate 100. In some embodiments, a tab cover tape (not shown) may be provided on an intermediate non-coating portion 150 on which a positive electrode tab 170 is provided.

In some embodiments, the second electrode plate 300 may be a negative electrode plate. A third insulating tape 410 and a fourth insulating tape 430 may be provided on an end of the second electrode plate 300 and an area adjacent to the second electrode plate 300. In some embodiments, a tab cover tape (not shown) may be provided on an intermediate non-coating portion 350 on which a negative electrode tab 370 is provided.

The separator 500 may be disposed between the first electrode plate 100 and the second electrode plate 300 to prevent short circuiting and to enable movement of lithium ions. The separator 500 may be made of polyethylene, polypropylene, a composite film of polyethylene and polypropylene, but is not limited thereto. In some embodiments, the separator 500 may be disposed between the first electrode plate 100 and the second electrode plate 300 and on the outside of the first electrode plate 100 (the surface that is in contact with the second electrode plate if wound).

Referring again to FIG. 2, the first insulating tape 210 and the second insulating tape 230 of the first electrode plate 100 may be provided to prevent a short circuit with the second electrode plate 300. The third insulating tape 410 and the fourth insulating tape 430 of the second electrode plate 300 may block contact between a base material of the first electrode plate 100 and a base material of the second electrode plate 300 and prevent the second electrode plate 300 from being deformed.

Hereinafter, each of the electrode plate and the insulating tape will be described in more detail.

First, referring to FIGS. 1 to 7, the first electrode plate 100 will be described.

In some embodiments, the first electrode plate 100 may be a positive electrode plate. The first electrode plate 100 may include a positive electrode base material 110, which is metal foil such as aluminum or an aluminum alloy. A positive electrode active material layer 120, such as transition metal oxide, may be provided on both surfaces of the positive electrode base material 110. A compound capable of reversible intercalation and deintercalation of lithium (lithiated intercalation compound) may be used as the positive electrode active material. In some embodiments, one or more types of complex oxides of lithium and a metal selected from cobalt, manganese, nickel, and a combination thereof may be used. The complex oxides may be lithium transition metal complex oxide, and specific examples may include lithium nickel-based oxide, lithium cobalt-based oxide, lithium manganese-based oxide, lithium iron phosphate-based compound, cobalt-free nickel-manganese-based oxide, or a combination thereof.

Positive electrode non-coating portions 130, 130', 140, and 140', which are areas not provided with the positive electrode active material layer 120, may be provided between the front end and the rear end of the first electrode plate 100. For convenience, the non-coating portion disposed between the front end and the rear end may be referred to as an intermediate non-coating portion 150. A positive electrode tab 170 may be disposed on one surface (surface A) of the intermediate non-coating portion 150. The positive electrode tab 170 may be disposed to face one side in a longitudinal direction of the first electrode plate 100.

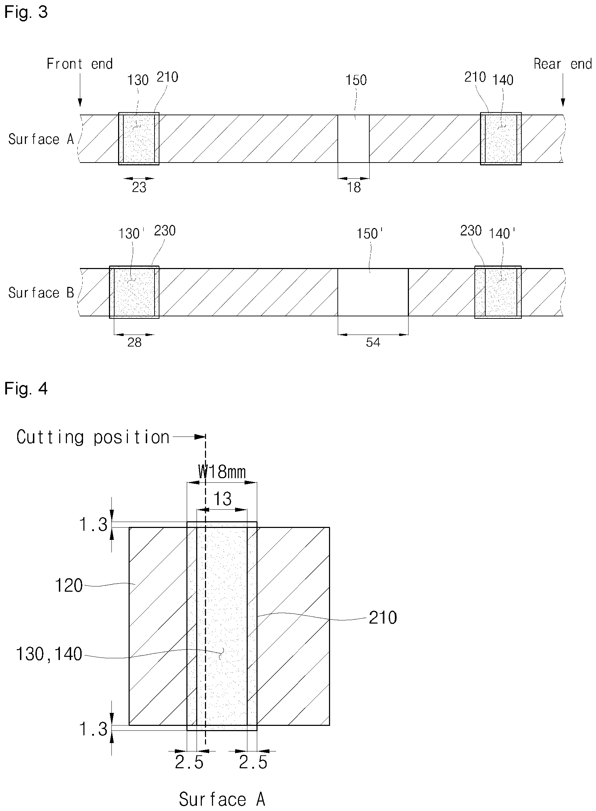

In some embodiments of the first electrode plate 100, a front end-side positive electrode non-coating portion of a surface A (hereinafter referred to as an A-surface front end positive electrode non-coating portion 130) may have a length that is less than that of a front end-side positive electrode non-coating portion of the surface B (hereinafter referred to as a B-surface front end positive electrode non-coating portion 130'). In some embodiments of the first electrode plate 100, a rear end-side positive electrode non-coating portion of the surface A (hereinafter referred to as an A-surface rear end positive electrode non-coating portion 140) may have a length that is less than that of a rear end-side positive electrode non-coating portion of the surface B (hereinafter referred to as a B-surface rear end positive electrode non-coating portion 140'). In some embodiments of the first electrode plate 100, an intermediate non-coating portion of the surface A (hereinafter, referred to as an A-surface intermediate non-coating portion 150) may have a length that is less than that of an intermediate non-coating portion of the surface B (hereinafter referred to as a B-surface intermediate non-coating portion 150'). Here, the `length' of the non-coating portion may be based on the longitudinal direction (left and right direction in FIG. 3) of the first electrode plate 100. A first insulating tape 210 may be attached to each of the A surface front end positive electrode non-coating portion 130 and the A surface rear end positive electrode non-coating portion 140 of the first electrode plate 100. A second insulating tape 230 may be attached to each of the B-surface front end positive electrode non-coating portion 130' and the B-surface rear end positive electrode non-coating portion 140' of the first electrode plate 100. The insulating tape attached to the front end-side non-coating portion may be referred to as a `Relamy tape.' The length of each of the A-surface rear end positive electrode non-coating portion 140 and the B-side terminal positive electrode non-coating portion 140' may be in a range of 13 mm or about 13 mm to 30 mm or about 30 mm.

The first insulating tape 210 may be made of an insulating material that is attached to the surface A of the first electrode plate 100. The first insulating tape 210 may be attached to the A-surface front end positive electrode non-coating portion 130 and the A-surface rear end positive electrode non-coating portion 140. The first insulating tape 210 may have a size greater than that of each of the A-surface front end positive electrode non-coating portion 130 and the A-surface rear end positive electrode non-coating portion 140 to cover all of the A-surface front end positive electrode non-coating portion 130 and the A-surface rear end positive electrode non-coating portion 140. In some embodiments, a length of the first insulating tape 210 (based on a longitudinal direction of the first electrode plate 100) may be greater by 2.5 mm or about 2.5 mm in the left and right direction than each of the A-surface front end positive electrode non-coating portion 130 and the A-surface rear end positive electrode non-coating portion 140. In some embodiments, a width of the first insulating tape 210 based on a width direction of the first electrode plate 100 may be greater by 1.3 mm or about 1.3 mm in a vertical direction than each of the A-surface front end positive electrode non-coating portion 130 and the A-surface rear end positive electrode non-coating portion 140. In some embodiments, a part of each of the non-coating portions 130, 140 that is covered by the first insulating tape 210 may be 2.5 mm or about 2.5 mm in length and 1.3 mm or about 1.3 mm in width (see FIG. 4).

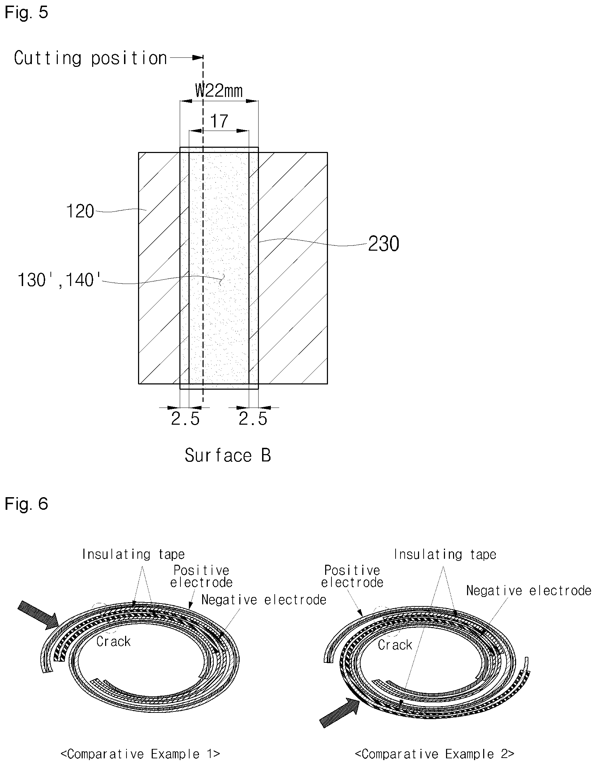

The second insulating tape 230 may be made of an insulating material that is attached to the surface B of the second electrode plate 300. The second insulating tape 230 may be attached to the B-surface front end positive electrode non-coating portion 130' and the B-surface rear end positive electrode non-coating portion 140'. The second insulating tape 230 may have a size greater than that of each of the B-surface front end positive electrode non-coating portion 130' and the B-surface rear end positive electrode non-coating portion 140' to cover all of the B-surface front end positive electrode non-coating portion 130' and the B-surface rear end positive electrode non-coating portion 140'. In some embodiments, a length of the second insulating tape 230 based on the longitudinal direction of the first electrode plate 100 may be greater by 2.5mm or about 2.5 mm in the left and right direction than each of the B-surface front end positive electrode non-coating portion 130' and the B-surface rear end positive electrode non-coating portion 140'. In some embodiments, a width of the second insulating tape 230 based on the width direction of the first electrode plate 100 may be greater by 1.3 mm or about 1.3 mm in a vertical direction than each of the B-surface front end positive electrode non-coating portion 130' and the B-surface rear end positive electrode non-coating portion 140'. In some embodiments, a part of each of the non-coating portions 130', 140' that is covered by the second insulating tape 230 may be 2.5 mm or about 2.5 mm in length and 1.3 mm or about 1.3 mm in width (see FIG. 5).

In some embodiments, because the lengths of the non-coating portions of the surface B are greater than the lengths of the non-coating portions of the surface A, the length of the second insulating tape 230 may also be greater than that of the first insulating tape 210. In some embodiments, the length of the second insulating tape 230 may be greater by 4 mm or about 4 mm ± 2 mm than that of the first insulating tape 210. The reason in which the second insulating tape 230 is longer than the first insulating tape 210 is because, if the electrode assembly 10 is wound, the insulating tape disposed on the outside has to be longer in order to prevent cracks from occurring in the electrode plate. If the insulating tapes attached to the surfaces A and B of the electrode plate have the same length, or if the length of the insulating tape attached to the surface A that is an inner side is longer than the length of the insulating tape attached to the surface B, there is a risk of cracks occurring in the electrode plate. Referring to FIG. 6, in the case of Comparative Example 1, the lengths of the insulating tapes of the surfaces A and B are the same (e.g., 18 mm or about 18 mm), and ends of the insulating tapes are disposed at the same position. In the case of Comparative Example 2, the insulating tape of the surface A is longer than the insulating tape of the surface B (for example, the insulating tape of the surface A has a length of 22 mm or about 22 mm, and the insulating tape of the surface B has a length of 18 mm or about 18 mm), the ends of the insulating tapes may be disposed at different positions. As the secondary battery is cycled, the negative electrode plate may be repeatedly contracted and expanded, and the insulating tape may serve to prevent the cracks from occurring due to the contraction and expansion. However, in the case of Comparative Example 1, the area indicated by the arrow of the negative electrode plate that is outside the end of the insulating tape may not be protected. In the case of Comparative Example 2, the area indicated by the arrow of the negative electrode plate that is not protected by the insulating tape is greater than that in Comparative Example 1. Therefore, there is a high risk of the cracks occurring at the ends of the insulating tape.

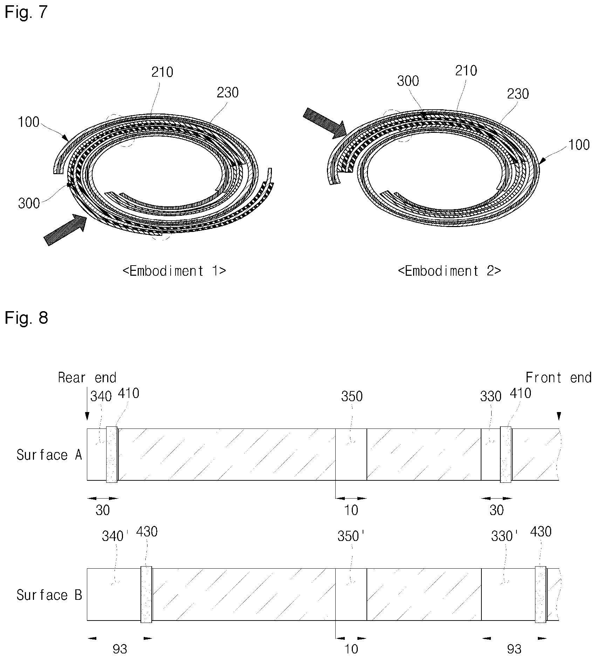

However, if the insulating tape attached to the surface B is longer than the insulating tape attached to the surface A, the second electrode plate 300 may be protected from the contraction and expansion by the insulating tape, and cracks may be prevented from occurring. FIG. 7 illustrates a case in which the insulating tape 230 of the surface B has a length greater than that of the insulating tape 210 of the surface A in Embodiments 1 and 2. Embodiment 1 is an example in which the A-surface insulating tape 210 is 18 mm or about 18 mm, and the B-surface insulating tape 230 is 22 mm or about 22 mm. Embodiment 2 is an example in which the A-surface insulating tape 210 is 18 mm or about 18 mm, and the B-surface insulating tape 230 is 20 mm or about 20 mm. In the case of Embodiment 1, the ends of the insulating tapes 210 and 230 may be disposed at different positions, but the second electrode plate 300 between the two ends may be an area (indicated by the arrow) that is protected by the insulating tape 230. In the case of Embodiment 2, the second electrode plate 300 on the area between the ends of the insulating tapes 210 and 230 may be an area (indicated by an arrow) that is protected by the insulating tape 230. Therefore, compared to the Comparative Examples shown in FIG. 6, the second electrode plate 300 may be prevented from cracking in the active material layer as the electrode plate contracts and expands.

The above-described first insulating tape 210 and second insulating tape 230 may be made of the same material. However, for process convenience, the first insulating tape 210 and the second insulating tape 230 may have different colors. In this case, there may be an advantage in that the insulating tape is attached by precisely matching a stepped portion (due to a difference in length of the insulating tapes) between the surfaces A and B.

Referring to FIG. 3, the second insulating tape 230 may be attached closer to the front end than the first insulating tape 210 in consideration of a distribution margin of the attachment position.

In some embodiments, if the first electrode plate 100 is cut in the winding process, the cutting may be performed on the area on which the insulating tape is attached. The cutting position may be adjusted and changed within a range of the non-coating portion. However, in embodiments, the cutting position may be disposed within an area in which the first insulating tape 210 and the second insulating tape 230 overlap each other.

In some embodiments, during the winding process the rear end of the first electrode plate 100 is disposed within an area of the third insulating tape 410 and the fourth insulating tape 430 of the second electrode plate 300. In some embodiments, the first electrode plate 100 and the size of the non-coating portion of the first electrode plate 100 may be adjusted.

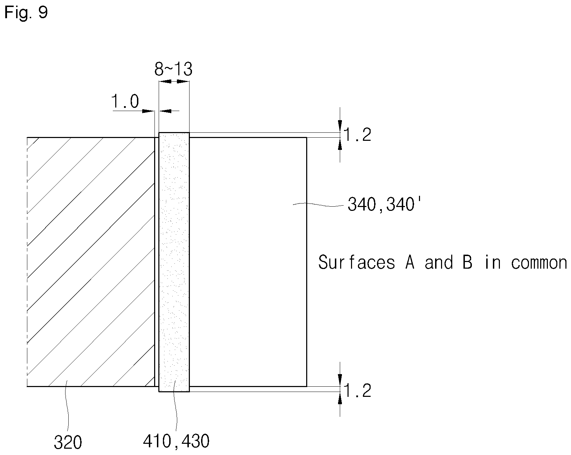

Hereinafter, the second electrode plate 300 will be described with reference to FIGS. 8 and 9.

FIG. 8 illustrates a plan view of both surfaces of the second electrode plate 300 in FIG. 1. FIG. 9 illustrates a plan view of a portion of the second electrode plate in FIG. 8.

In some embodiments, the second electrode plate 300 may be a negative electrode plate. The second electrode plate 300 may include a negative electrode base material 310 that is metal foil such as copper, a copper alloy, nickel, or a nickel alloy. A negative electrode active material layer 320, such as graphite or carbon, is provided on both surfaces of the negative electrode base material 310. In some embodiments, the negative active material may include a material capable of reversibly intercalating/deintercalating lithium ions, a lithium metal, an alloy of the lithium metal, a material capable of doping and dedoping lithium, or transition metal oxide. The material capable of reversibly intercalating/deintercalating lithium ions may be a carbon-based negative electrode active material and may include, for example, crystalline carbon, amorphous carbon, or a combination thereof. Examples of the crystalline carbon may include graphite such as natural graphite or artificial graphite, and examples of the amorphous carbon may include soft carbon or hard carbon, mesophase pitch carbide, calcined coke, etc. A Si-based negative electrode active material or an Sn-based negative electrode active material may be used as the material capable of doping and dedoping lithium. The Si-based negative electrode active material may be silicon, silicon-carbon composite, SiOx (0 < x < 2), an Si-based alloy, or a combination thereof. The silicon-carbon composite may be a composite of silicon and amorphous carbon. According to some embodiments, the silicon-carbon composite may be in the form of silicon particles and amorphous carbon coated on a surface of each silicon particle. The silicon-carbon composite may further include crystalline carbon. For example, the silicon-carbon composite may include a core containing crystalline carbon and silicon particles and an amorphous carbon coating layer disposed on a surface of the core.

The negative electrode non-coating portions 330, 330', 340, and 340', which are areas that the negative electrode active material layer 320 is not provided, may be provided between the front end and the rear end of the second electrode plate 300. For convenience, non-coating portions disposed between the front end and the rear end may be referred to intermediate non-coating portions 350 and 350'. A negative electrode tab 370 may be disposed on one surface (surface B) of intermediate non-coating portion 350'. The negative electrode tab 370 may be disposed to face the other side in the longitudinal direction of the second electrode plate 300 (that is, facing a direction opposite to the positive electrode tab 170 on surface A).

In some embodiments of the second electrode plate 300, a front end-side negative electrode non-coating portion of a surface A (hereinafter referred to as an A-surface front end negative electrode non-coating portion 330) may have a length that is greater than that of a front end-side negative electrode non-coating portion of the surface B (hereinafter referred to as a B-surface front end negative electrode non-coating portion 330'). In some embodiments of the second electrode plate 300, a rear end-side negative electrode non-coating portion of the surface A (hereinafter referred to as an A-surface rear end negative electrode non-coating portion 340) may have a length that is less than that of a rear end-side negative electrode non-coating portion of the surface B (hereinafter referred to as a B-surface rear end negative electrode non-coating portion 340'). In some embodiments of the second electrode plate 300, an intermediate non-coating portion of the surface A (hereinafter referred to as an A-surface intermediate non-coating portion 350) may have a length that is less than or equal to a length of an intermediate non-coating portion of the surface B (hereinafter referred to as a B-surface intermediate non-coating portion 350'). Here, the `length' of the non-coating portion may be based on the longitudinal direction (left and right direction in FIG. 8) of the second electrode plate 300. The third insulating tape 410 may be attached to each of the A surface front end negative electrode non-coating portion 330 and the A surface rear end negative electrode non-coating portion 340 of the second electrode plate 300. The fourth insulating tape 430 may be attached to each of the B-surface front end negative electrode non-coating portion 330' and the B-surface rear end negative electrode non-coating portion 340' of the second electrode plate 300. The insulating tape attached to the front end-side non-coating portion may be referred to as a `Relamy tape.' In some embodiments, the length of each of the intermediate non-coating portions 350 and 350' may be less than the length of each of the intermediate non-coating portions 150 and 150' of the first electrode plate 100. The length of each of the A-surface rear end negative electrode non-coating portion 140 and the B-surface rear end negative electrode non-coating portion 140' may be greater than the length of each of the rear end non-coating portions 130 and 130' of the first electrode plate 100 (see FIG. 1).

The third insulating tape 410 may be made of an insulating material that is attached to the surface A of the second electrode plate 300. The third insulating tape 410 may be attached to the A-surface front end negative electrode non-coating portion 330 and the A-surface rear end negative electrode non-coating portion 340. The third insulating tape 410 may have a size less than that of each of the A-surface front end negative electrode non-coating portion 330 and the A-surface rear end negative electrode non-coating portion 340. In more detail with reference to FIG. 9, the length of the third insulating tape 410 in the longitudinal direction of the second electrode plate 300 may be at least about 8 mm or more. In some embodiments, the length of the third insulating tape 410 is provided so that the position of the end of the rear end-side positive electrode base material does not deviate from the attachment area of the third insulating tape 410 due to winding distribution. In some embodiments, a width of the third insulating tape 410 based on a width direction of the second electrode plate 300 may be greater by 1.2 mm or about 1.2 mm ± 1 mm in a vertical direction than each of the A-surface front end negative electrode non-coating portion 330 and the A-surface rear end negative electrode non-coating portion 340. In some embodiments, the third insulating tape 410 may be attached to be spaced less than about 1 mm from the negative electrode active material layer 320 in the longitudinal direction of the second electrode plate 300. This configuration minimizes thickness distribution due to overlap between the negative electrode active material layer 320 and the third insulating tape 410. In some embodiments, the insulating tape may be provided at the rear end of the second electrode plate 300 to prevent defects in which the second electrode plate 300 is deformed into the Z-shape due to the contraction and expansion.

As described above, the insulating tape may be attached to the front end of the positive electrode plate, and the front end of the positive electrode plate may be disposed within the attachment area of the insulating tape of the front end of the negative electrode plate to prevent a short circuit between the positive and negative electrodes from occurring even through the negative electrode plate is formed into the Z-shape.

According to the embodiments of the present disclosure, the front end and the rear end of the positive electrode plate may be insulated from each other to prevent a short circuit from occurring due to the Z-shaped deformation of the front end of the negative electrode plate.

In addition, the rear end of the negative electrode plate may be insulated to block a short circuit between the negative electrode plate and the positive electrode plate.

Embodiments are set out in the following clauses.

Clause 1. An electrode assembly for a secondary battery, comprising: a first electrode plate on which a non-coating portion is disposed on each of a front end that is an end toward a winding center and a rear end that is an end opposite to the front end, a surface A and a surface B, each of which is provided with an intermediate non-coating portion, are disposed between the front end and the rear end, and a positive electrode tab is provided on the intermediate non-coating portion of the surface B; a second electrode plate on which a non-coating portion is disposed on each of a front end that is an end toward a winding center and a rear end that is an end opposite to the front end, a surface A and a surface B, each of which is provided with an intermediate non-coating portion, are disposed between the front end and the rear end, and a negative electrode tab is provided on the intermediate non-coating portion of the surface B; a tab cover tape attached to each of the positive electrode tab and the negative electrode tab; a first insulating tape attached to each of non-coating portions of front and rear ends of the surface A of the first electrode plate; a second insulating tape attached to each of non-coating portions of front and rear ends of the surface B of the first electrode plate; a third insulating tape attached to each of front and rear ends of the surface A of the second electrode plate; and a fourth insulating tape attached to each of front and rear ends of the surface B of the second electrode plate, wherein the first insulating tape and the second insulating tape have sizes different from each other.

Clause 2. The electrode assembly of clause 1, wherein the surface A of each of the first electrode plate and the second electrode plate is a surface facing the winding center if wound, and the surface B is a surface opposite to the surface A.

Clause 3. The electrode assembly of clause 2, wherein a length of the second insulating tape in a longitudinal direction of the first electrode plate is greater than that of the first insulating tape.

Clause 4. The electrode assembly of clause 3, wherein a length of the second insulating tape is greater by about 4 mm ± 2 mm than that of the first insulating tape.

Clause 5. The electrode assembly of clause 2, wherein each of the first insulating tape and the second insulating tape is larger than the non-coating portion of the first electrode plate.

Clause 6. The electrode assembly of clause 5, wherein a difference between a length of each of the first insulating tape and the second insulating tape and a length of the non-coating portion of the first electrode plate in a longitudinal direction of the first electrode plate is about 2.5 mm.

Clause 7. The electrode assembly of clause 5, wherein a difference between a width of each of the first insulating tape and the second insulating tape and a width of the non-coating portion in a width direction of the first electrode plate is about 1.3 mm.

Clause 8. The electrode assembly of clause 2, wherein each of the third insulating tape and the fourth insulating tape is attached to be spaced apart from a negative electrode active material layer of the second electrode plate in a longitudinal direction of the second electrode plate.

Clause 9. The electrode assembly of clause 8, wherein a spaced distance between each of the first and fourth insulating tapes and the negative electrode active material layer is about 1 mm or less.

Clause 10. The electrode assembly of clause 8, wherein each of the third insulating tape and the fourth insulating tape is larger than the non-coating portion of the second electrode plate.

Clause 11. The electrode assembly of clause 10, wherein a difference between a width of each of the third insulating tape and the fourth insulating tape and a width of the non-coating portion in a width direction of the second electrode plate is about 1.2 mm ± 1 mm.

Clause 12. The electrode assembly of clause 2, wherein, in a winding process, a cutting position of the first electrode plate is cut within attachment areas of the first insulating tape and the second insulating tape.

Clause 13. The electrode assembly of clause 12, wherein a cutting position of the first electrode plate is within an overlapping area between the first insulating tape and the second insulating tape.

Clause 14. The electrode assembly of clause 13, wherein a cut end of the first electrode plate is within attachment areas of the third insulating tape and the fourth insulating tape.

Clause 15. An electrode assembly for a secondary battery, comprising: a first electrode plate provided with a surface A that faces a winding center if wound and a surface B that is opposite to the surface A, wherein each of the surfaces A and B is provided with a non-coating portion, which is disposed on each of a front end that is an end toward the winding center and a rear end that is an end opposite to the front end, and an intermediate non-coating portion provided between the front end and the rear end, and a positive electrode tab is provided on the intermediate non-coating portion of the surface B; a second electrode plate provided with a surface A that faces a winding center if wound and a surface B that is opposite to the surface A, wherein each of the surfaces A and B is provided with a non-coating portion, which is disposed on each of a front end that is an end toward the winding center and a rear end that is an end opposite to the front end, and an intermediate non-coating portion provided between the front end and the rear end, and a negative electrode tab is provided on the intermediate non-coating portion of the surface B; a tab cover tape attached to each of the positive electrode tab and the negative electrode tab; a first insulating tape attached to each of non-coating portions of front and rear ends of the surface A of the first electrode plate; a second insulating tape attached to each of non-coating portions of front and rear ends of the surface B of the first electrode plate; a third insulating tape attached to each of front and rear ends of the surface A of the second electrode plate; and a fourth insulating tape attached to each of front and rear ends of the surface B of the second electrode plate, wherein a size of the non-coating portion of the surface B of the first electrode plate is greater than that of the non-coating portion of the surface A of the first electrode plate.

Clause 16. The electrode assembly of clause 15, wherein the first insulating tape is larger than the non-coating portion of the surface A of the first electrode plate, and the second insulating tape is larger than the non-coating portion of the surface B of the first electrode plate.

Clause 17. The electrode assembly of clause 15, wherein a length of the second insulating tape in a longitudinal direction of the first electrode plate is greater by about 4 mm ± 2 mm than that of the first insulating tape.

Clause 18. The electrode assembly of clause 15, wherein a difference between a length of each of the first insulating tape and the second insulating tape and a length of the non-coating portion of the first electrode plate in a longitudinal direction of the first electrode plate is about 2.5 mm.

Clause 19. The electrode assembly of clause 18, wherein a difference between a width of each of the first insulating tape and the second insulating tape and a width of the non-coating portion in a width direction of the first electrode plate is about 1.3 mm.

Clause 20. The electrode assembly of clause 15, wherein each of the third insulating tape and the fourth insulating tape is attached to be spaced apart from a negative electrode active material layer of the second electrode plate in a longitudinal direction of the second electrode plate.

Clause 21. The electrode assembly of clause 20, wherein a spaced distance between each of the first and fourth insulating tapes and the negative electrode active material layer is about 1 mm or less.

Clause 22. The electrode assembly of clause 20, wherein each of the third insulating tape and the fourth insulating tape is larger than the non-coating portion of the second electrode plate.

Clause 23. The electrode assembly of clause 22, wherein a difference between a width of each of the third insulating tape and the fourth insulating tape and a width of the non-coating portion in a width direction of the second electrode plate is about 1.2 mm ± 1 mm.

Clause 24. The electrode assembly of clause 15, wherein, in a winding process, a cutting position of the first electrode plate is within attachment areas of the first insulating tape and the second insulating tape.

Clause 25. The electrode assembly of clause 24, wherein a cutting position of the first electrode plate is within an overlapping area between the first insulating tape and the second insulating tape.

Clause 26. The electrode assembly of clause 25, wherein a cut end of the first electrode plate is within attachment areas of the third insulating tape and the fourth insulating tape.

The above-mentioned embodiments are merely examples, and, thus, the present disclosure is not limited to the foregoing embodiments. It will be understood by those of ordinary skill in the art that various changes in form and details may be made without departing from the scope of the present disclosure as defined by the following claims.

## Claims

1. An electrode assembly for a secondary battery, the electrode assembly comprising:
a first electrode plate on which a non-coating portion is disposed at a front end that is toward a winding center of the electrode assembly and a non-coating portion is disposed at a rear end that is opposite to the front end, the first electrode plate has a surface A and a surface B opposite to the surface A, each of the surfaces A and B is provided with an intermediate non-coating portion that is disposed between the front end and the rear end of the first electrode plate, and a positive electrode tab is provided on the intermediate non-coating portion of the surface A;
a second electrode plate on which a non-coating portion is disposed at a front end that is toward the winding center and a non-coating portion is disposed at a rear end that is opposite to the front end, the second electrode plate has a surface A and a surface B, each of the surfaces A and B is provided with an intermediate non-coating portion that is disposed between the front end and the rear end of the second electrode plate, and a negative electrode tab is provided on the intermediate non-coating portion of the surface B;
a tab cover tape attached to the positive electrode tab;
a tab cover tape attached to the negative electrode tab;
a first insulating tape attached to the non-coating portions of the surface A at the front and rear ends of the first electrode plate;
a second insulating tape attached to the non-coating portions of the surface B at the front and rear ends of the first electrode plate;
a third insulating tape attached to the surface A at each of the front and rear ends of the second electrode plate; and
a fourth insulating tape attached to the surface B at each of the front and rear ends of the second electrode plate,
wherein the first insulating tape and the second insulating tape are different sizes.

2. The electrode assembly as claimed in claim 1, wherein the surface A of each of the first electrode plate and the second electrode plate faces the winding center of the electrode assembly.

3. The electrode assembly as claimed in claim 2, wherein a length of the second insulating tape in a longitudinal direction of the first electrode plate is longer than a length of the first insulating tape in the longitudinal direction of the first electrode plate,
and wherein optionally the length of the second insulating tape is greater by about 4 mm ± 2 mm than the length of the first insulating tape.

4. The electrode assembly as claimed in claim 2 or 3, wherein each of the first insulating tape and the second insulating tape is larger than each of the non-coating portions at the front and rear ends of the first electrode plate,
and wherein optionally at least one of:
a difference between a length of each of the first insulating tape and the second insulating tape and a length of each of the non-coating portions at the front and rear ends of the first electrode plate in a longitudinal direction of the first electrode plate is about 2.5 mm; and
a difference between a width of each of the first insulating tape and the second insulating tape and a width of each of the non-coating portions at the front and rear ends of the first electrode plate in a width direction of the first electrode plate is about 1.3 mm.

5. The electrode assembly as claimed in claim 2, 3 or 4, wherein each of the third insulating tape and the fourth insulating tape is spaced apart from a negative electrode active material layer of the second electrode plate in a longitudinal direction of the second electrode plate,
wherein optionally at least one of:
a distance between each of the third and fourth insulating tapes and the negative electrode active material layer is about 1 mm or less; and
each of the third insulating tape and the fourth insulating tape is larger than each of the non-coating portions at the front and rear ends of the second electrode plate, and wherein further optionally a difference between a width of each of the third insulating tape and the fourth insulating tape and a width of each of the non-coating portions at the front and rear ends of the second electrode plate in a width direction of the second electrode plate is about 1.2 mm ± 1 mm.

6. The electrode assembly as claimed in any one of claims 2 to 5, wherein a cut end of the first electrode plate is positioned within attachment areas of the first insulating tape and the second insulating tape,
wherein optionally the cut end of the first electrode plate is positioned within an overlapping area between the first insulating tape and the second insulating tape,
and wherein further optionally the cut end of the first electrode plate is within positioned attachment areas of the third insulating tape and the fourth insulating tape.

7. An electrode assembly for a secondary battery, the electrode assembly comprising:
a first electrode plate provided with a surface A that faces a winding center of the electrode assembly and a surface B that is opposite to the surface A, wherein each of the surfaces A and B is provided with a non-coating portion that is disposed at a front end that faces the winding center and a non-coating portion that is disposed at a rear end that is opposite to the front end, each of the surfaces A and B is provided with an intermediate non-coating portion provided between the front end and the rear end, and a positive electrode tab is provided on the intermediate non-coating portion of the surface A;
a second electrode plate provided with a surface A that faces the winding center and a surface B that is opposite to the surface A, wherein each of the surfaces A and B is provided with a non-coating portion that is disposed at a front end that faces the winding center and a non-coating portion that is disposed at a rear end that is opposite to the front end, each of the surfaces A and B is provided with an intermediate non-coating portion provided between the front end and the rear end, and a negative electrode tab is provided on the intermediate non-coating portion of the surface B;
a tab cover tape attached to the positive electrode tab;
a tab cover tape attached to the negative electrode tab;
a first insulating tape attached to the non-coating portions of the surface A at the front and rear ends;
a second insulating tape attached to the non-coating portions of the surface B at the front and rear ends;
a third insulating tape attached to the surface A at each of the front and rear ends; and
a fourth insulating tape attached to the surface B at each of the front and rear ends,
wherein sizes of the non-coating portions of the surface B of the first electrode plate are greater than sizes of the non-coating portions of the surface A of the first electrode plate.

8. The electrode assembly as claimed in claim 7, wherein the first insulating tape is larger than the non-coating portions at the front and rear ends of the surface A of the first electrode plate, and
wherein the second insulating tape is larger than the non-coating portions at the front and rear ends of the surface B of the first electrode plate.

9. The electrode assembly as claimed in claim 7 or 8, wherein a length of the second insulating tape in a longitudinal direction of the first electrode plate is longer by about 4 mm ± 2 mm than a length of the first insulating tape.

10. The electrode assembly as claimed in claim 7, 8 or 9, wherein a difference between a length of each of the first insulating tape and the second insulating tape and a length of each of the non-coating portions at the front and rear ends of the first electrode plate in a longitudinal direction of the first electrode plate is about 2.5 mm,
and wherein optionally a difference between a width of each of the first insulating tape and the second insulating tape and a width of each of the non-coating portions at the front and rear ends of the first electrode plate in a width direction of the first electrode plate is about 1.3 mm.

11. The electrode assembly as claimed in claim 7 to 10, wherein each of the third insulating tape and the fourth insulating tape is spaced apart from a negative electrode active material layer of the second electrode plate in a longitudinal direction of the second electrode plate.

12. The electrode assembly as claimed in claim 11, wherein a distance between each of the third and fourth insulating tapes and the negative electrode active material layer is about 1 mm or less.

13. The electrode assembly as claimed in claim 11 or 12, wherein each of the third insulating tape and the fourth insulating tape is larger than each of the non-coating portions at the front and rear ends of the second electrode plate,
and wherein optionally a difference between a width of each of the third insulating tape and the fourth insulating tape and a width of each of the non-coating portions at the front and rear ends of the second electrode plate in a width direction of the second electrode plate is about 1.2 mm ± 1 mm.

14. The electrode assembly as claimed in any one of claims 7 to 13, wherein a cut end of the first electrode plate is positioned within attachment areas of the first insulating tape and the second insulating tape.

15. The electrode assembly as claimed in claim 14, wherein the cut of the first electrode plate is positioned within an overlapping area between the first insulating tape and the second insulating tape,
and wherein optionally the cut end of the first electrode plate is positioned within attachment areas of the third insulating tape and the fourth insulating tape.
